(19) Europäisches Patentamt
European Patent Office
Office européen des brevets

(11) Publication number: 0 520 095 A1

# (12) EUROPEAN PATENT APPLICATION

(21) Application number: 91201663.1

(22) Date of filing: 28.06.91

(51) Int. Cl.[5]: C08K 5/521, C08L 25/16, //(C08L25/16,101:00)

(43) Date of publication of application: 30.12.92 Bulletin 92/53

(84) Designated Contracting States: AT BE CH DE DK ES FR GB GR IT LI NL SE

(71) Applicant: DSM N.V.
Het Overloon 1
NL-6411 TE Heerlen(NL)
Applicant: JAPAN SYNTHETIC RUBBER CO., LTD.
11-24, Tsukiji-2-chome Chuo-ku
Tokyo 104(JP)

(72) Inventor: Suzuki, Masanori, c/o Japan Synthetic Rubber Co.
Ltd., 100 Kawajiri-cho
Yokkaichi mie 510(JP)
Inventor: Itoh, Hiroyuki, c/o Japan Synthetic Rubber Co.
Ltd., 100 Kawajiri-cho
Yokkaichi mie 510(JP)
Inventor: Mawatari, Masaaki
650-1 Kasado-cho
Suzuka-shi, Mieken(JP)
Inventor: Furuyama, Tateki, c/o Japan Synthetic Rubber Co.
Ltd., 100 Kawajiri-cho
Yokkaichi mie 510(JP)

(74) Representative: Bleukx, Lucas Lodewijk Maria, Ir. et al
OCTROOIBUREAU DSM Postbus 9
NL-6160 MA Geleen(NL)

## (54) Flame retardant resin composition.

(57) A flame retardant resin composition including the following components (a), (b) and (c) in the ratio (a):(b):(c)-=40-96:1-40:3-40% by weight. Component (a) is a thermoplastic resin including (i) 0-70% by weight of a rubber-like polymer and (ii) 100-30% by weight of a polymer component formed from monomers selected from the group consisting of a methylated aromatic vinyl monomer, and, optionally, a hydroxylated aromatic vinyl monomer, a (meth)acrylic acid ester monomer, maleic anhydride, and a maleimide monomer; graft ratio of the thermoplastic resin being 10-150% when the rubber-like polymer is used. Component (b) is a thermosetting resin and Component (c) is a phosphate compound.

EP 0 520 095 A1

A. Field of the Invention

The present invention relates to a flame retardant resin composition with superior flame retardant characteristics.

B. Prior Art

Styrene resins represented by ABS resin and impact resistant polystyrene resin are widely used because of their well balanced characteristics. In the United States, the materials used for electrical appliances such as OA equipment must be highly flame-retardant, since they are regulated under the UL Standard, which is the standard concerning the flame retardance of plastics for electrical appliances.

Conventionally, styrene resins are made flame-retardant by the addition of a large amount of halogen-containing compounds. The incorporation of a halogen-containing compound to the resin, however, causes problems of the environmental pollution and toxicity to humans due to generation of halogenated hydrogen gas during molding and combustion of the resin.

Because of this, development of halogen-free or low-halogen flame retardant styrene resins has been desired.

The use of phosphate compounds instead of halogen compounds is an alternative method of making styrene resins flame-retardant. Phosphate compounds, however, improve only very limitedly the flame retardant characteristic of ABS resin and impact-resistant styrene resins.

C. Problems to be Solved by the Invention

The present inventors have conducted extensive studies about flame-retardant resins comprising ABS resin and a phosphate compound, and have found that the addition of a phenol resin to a composition of a ABS resin to which p-methylstyrene is copolymerized and a phosphate compound could greatly promote the flame retardance of the resin. This finding has led to the completion of the present invention.

D. Means for the Solution of the Problems

Accordingly, an object of the present invention is to provide a flame retardant resin composition comprising the following components (a), (b) and (c) in the ratio (a):(b):(c) = 40-96:1-40:3-40 % by weight;

Component (a): a thermoplastic resin comprising (i) 0-70% by weight of a rubber-like polymer and (ii) 100-30% by weight of a polymer component formed from monomers selected from the group consisting of a methylated aromatic vinyl monomer, and, optionally, a hydroxylated aromatic vinyl monomer, an aromatic vinyl monomer, a cyanated vinyl monomer, a (meth)acrylic acid ester monomer, maleic anhydride, and a maleimide monomer; graft ratio of the thermoplastic resin being 10-150% when the rubber-like polymer is used,

Component (b): a thermosetting resin, and

Component (c): a phosphate compound.

The present invention will now be explained in detail.

Component (a) of the present invention is a thermoplastic resin comprising (i) 0-70% by weight of a rubber-like polymer and (ii) 100-30% by weight of a polymer component formed from monomers selected from the group consisting of a methylated aromatic vinyl monomer, and, optionally, a hydroxylated aromatic vinyl monomer, an aromatic vinyl monomer, a cyanated vinyl monomer, a (meth)acrylic acid ester monomer, maleic anhydride, and a maleimide monomer; of which the graft ratio is 10-150% when the rubber-like polymer is used.

Examples which can be given of (i) rubber-like polymer include conjugated diene polymers, e.g. polybutadiene, styrene-butadiene copolymers, acrylonitrile-butadiene copolymers, (meth)acrylate-butadiene copolymers; block copolymers comprised of an aromatic vinyl compound and a conjugated diene compound, e.g. acrylic rubber, ethylene-α-olefin copolymers, ethylene-α-olefin-polyene copolymers; hydrogenated conjugated diene polymers; and the like.

Preferable α-olefins used in the above ethylene-α-olefin copolymers are unsaturated hydrocarbons having 3-20 carbon atoms, e.g. propylene, butene-1, pentene-1, hexene-1, heptene-1, 4-methylbutene-1, 4-methylpentene-1, and the like.

Preferable block copolymers comprised of an aromatic vinyl compound and a conjugated diene compound are those represented by formulae, $(A-B)_n-$, $(A-B)_n-A$, or $(A-B)_n-X$, wherein A is a block copolymers comprised of an aromatic vinyl compound polymer block, B is a polymer block of which the

major component is a conjugated diene compound, X is a coupling agent residue, and n is an integer of 1 or more.

Preferable examples of hydrogenated conjugated diene polymers are random copolymers of the above block copolymer, aromatic vinyl compound, and conjugated diene compound; hydrogenated compounds of block copolymers having the formulae, $(C-D)_n$-, $(C-D)_n$-C, or $(C-D)_n$-X, wherein C is a polybutadiene segment containing the 1,2-vinyl structure of 20% or less, D is a block segment containing polybutadiene or aromatic vinyl-butadiene copolymer, of which the 1,2-vinyl structure of combined butadiene portion is 30-95%, X is a coupling agent residue, and n is an integer of 1 or more.

The hydrogenation degree of hydrogenated rubber-like polymer (i) is preferably at least 80% or more, interms of the hydrogenation degree of olefinic unsaturated bonds in the conjugated diene compound polymer, with more preferable range being 90% or more, and particularly 95% or more.

The above polymer component (ii) is comprised of a methylated aromatic vinyl monomer, and, optionally, a hydroxylated aromatic vinyl monomer, an aromatic vinyl monomer, a cyanated vinyl monomer, a (meth)acrylic acid ester monomer, maleic anhydride, and a maleimide monomer.

A preferable aromatic vinyl compound is styrene, and a preferable conjugated diene compound is butadiene or isoprene.

Examples of methylated aromatic vinyl monomers include o-methylstyrene, p-methylstyrene, m-methylstyrene, and their α-methylstyrene derivatives, as well as mixtures of two or more of these; dimethylstyrene, trimethylstyrene, tetramethylstyrene, pentamethylstyrene, and the like. Among these, preferable are o-methylstyrene, p-methylstyrene, and m-methylstyrene, and mixtures of two or more of these.

Examples of hydroxylated aromatic vinyl monomers which can be given are the compounds represented by the following structural formula (I).

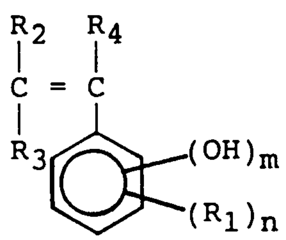

(I)

(wherein $R_1$ to $R_4$ are hydrogen atoms, alkyl groups with one to five carbon atoms, phenyl groups, halogen atoms, halogenated alkyl groups, cyclohexyl groups, or alkylphenyl groups; m is an integer from one to five; and n is an integer from one to four).

Among these, o-hydroxystyrene, p-hydroxystyrene, and m-hydroxystyrene, and mixtures of two or more of these are preferable.

Examples of aromatic vinyl monomers include styrene, α-methylstyrene, bromostyrene, dibromostyrene, tribromostyrene, chlorostyrene, α-ethylstyrene, and the like. Among these, styrene and α-methylstyrene are preferable.

Examples of cyanated vinyl monomers include acrylonitrile, methacrylonitrile, and the like. Of these, acrylonitrile is preferable.

Examples of (meth)acrylic acid esters which can be given are methyl acrylate, ethyl acrylate, butyl acrylate, methyl methacrylate, ethyl methacrylate, butyl methacrylate, and the like, with methyl methacrylate being the most preferable.

Examples which can be given of maleimide-type monomers include maleimide, N-methyl maleimide, N-ethyl maleimide, N-propyl maleimide, N-isopropyl maleimide, N-cyclohexyl maleimide, N-phenyl maleimide, N-(p-bromophenyl) maleimide, tribromophenyl maleimide, N-(p-fluorophenyl) maleimide, and the like. Among these, the preferable examples are maleimide, N-phenyl maleimide, N-cyclohexyl maleimide, tribromophenyl maleimide, and the like.

The amount of rubber-like polymer (i) contained in component (a) is 0-70% by weight, and preferably 0-60% by weight. When the rubber-like polymer (i) is contained as an essential component, in order to obtain the effect of the addition from the rubber-like polymer, 5-70% by weight is preferably used, and more preferably, 10-60% by weight. If a 70% by weight content is exceeded, the surface gloss and the flame retardance of the products molded from the composition of present invention are reduced.

Polymer component (ii) contained in component (a) is a polymer of the above-mentioned monomers. Preferable monomers are as follows:

(1) p-Methylstyrene/styrene
(2) p-Methylstyrene/acrylonitrile
(3) p-Methylstyrene/styrene/acrylonitrile
(4) p-Methylstyrene/styrene/methylemethacrylate
(5) p-Methylstyrene/styrene/phenylmaleimide/acrylonitrile

The amount of polymer component (ii) contained in component (a) is 100-30% by weight, and preferably 100-40% by weight. When the rubber-like polymer (i) is contained as an essential component, a preferable amount of polymer component (ii) is 95-30% by weight, and more preferably 90-40% by weight.

The amount of combined methylated aromatic vinyl monomers in component (a) is usually 3-100% by weight, preferably 7-70% by weight, and more preferably 30-70% by weight, with an ideal range being 35-65% by weight. If the amount of the combined methylated aromatic vinyl monomers is less than 3% by weight, sufficient flame retardance of the products cannot be obtained.

In this specification, the expressions "methylated aromatic vinyl monomer" means a "methylated aromatic vinyl monomer" contained as a monomer component of a homopolymer, as a monomer component in a copolymer, or as a graft polymer component in a rubber-like polymer in component (a).

The graft ratio of component (a), when the rubber-like polymer (i) is used as an essential component, is 10-150% by weight and preferably 20-120% by weight. If the graft ratio is less than 10% by weight, the effect of the addition of the rubber-like polymer is not adequately demonstrated. For example, an adequate impact resistance is not obtained. On the other hand, if 150% by weight is exceeded there is an undesirable tendency for dripping due to melting to occur during flame retardation.

The block polymerization method, the solution polymerization method, the suspension polymerization method, the emulsion polymerization method, and the precipitation polymerization method, as well as their combinations, can be used for preparing component (a) of the present invention.

The amount of component (a) in the composition of the present invention is 40-96% by weight, preferably 50-90% by weight, and more Preferably 50-80% by weight. When the amount is less than 40% by weight, the molded products may have inferior outward appearance, whereas the amount exceeding 96% by weight impairs the flame retardance of the products.

A thermosetting resin, component (b) of the present invention, is a resin which hardens by crosslinking when combusted. Epoxy resins, phenol resins, polyacrylonitrile, and the like are preferably used. Among phenol resins, resol-type phenol resins, particularly non-heatmelt or heatmelt particle resins, are preferable. Also particularly preferable are resol-type phenol resins containing a reactive methylol group. A preferable amount of methylol group is 3-15% by weight.

The amount of component (b) in the composition of the present invention is 1-40% by weight, preferably 3-30% by weight, and more preferably 3-20% by weight. The amount of less than 1% by weight is insufficient to improve flame retardance of the products, while the amount exceeding 40% by weight not only impairs the flame retardance but also the outward appearance of the molded products.

Preferable compounds which can be used as a phosphate compound of component (c) is those represented by the formula,

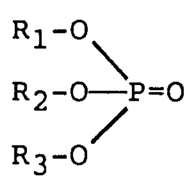

wherein $R_1$, $R_2$, and $R_3$ may be the same or different and each independently represents a hydrocarbon group or a halogenated hydrocarbon group, and preferably an alkyl or halogenated alkyl group having 1-8 carbon atoms, or an aryl or halogenated aryl group having 6-12 carbon atoms.

Following compounds are given as specific examples of these phosphate compounds; trimethylphosphate, triethylphosphate, tripropylphosphate, tributylphosphate, tripentylphosphate, trihexylphosphate, tricyclohexylphosphate, triphenylphosphate, tricresylphosphate, trixylenylphosphate, tris-(chloroethyl)-phosphate, tris-(dichloroethyl)-phosphate, tris-(bromoethyl)-phosphate, tris-(dibromoethyl)-phosphate, tris-(dibromopropyl)-phosphate, tris-(chlorobromopropyl)-phosphate, tris-(dibromobutyl)-phosphate, tris-(chlorobromobutyl)-phosphate, tris-(chlorophenyl)-phosphate, tris-(dichlorophenyl)-phosphate, tris-(bromophenyl)-phosphate, tris-(dibromophenyl)-phosphate, tris-(tribromophenyl)-phosphate, dimethylethylphosphate, methyldibutylphosphate, ethyldipropylphosphate, 4-cholrophenyldiphenylphosphate, phenyldibromophenylphosphate, and the like. These phosphates may be used either singly, or two or more of

them may be used in combination. Of the above phosphates, particularly preferable are trimethylphosphate, tributylphosphate, triphenylphosphate, tricresylphosphate, trixylenylphosphate, tris-(chloroethyl)-phosphate, and the like.

A condensed-type phosphate can also be used together. As preferable condensed-type phosphates, those represented by the following formula can be given.

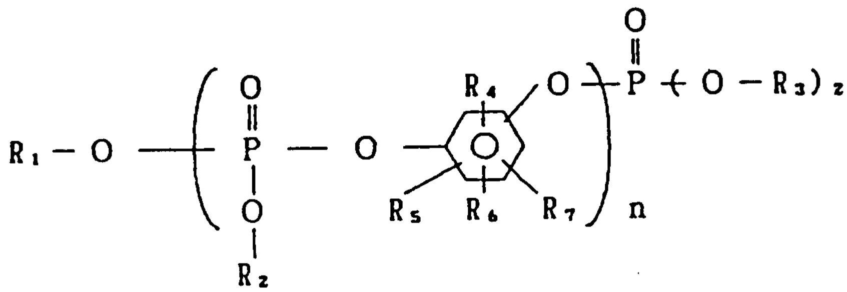

wherein $R_1$, $R_2$, and $R_3$ may be the same or different and each independently represents a hydrocarbon group, $R_4$, $R_5$, $R_6$, and $R_7$ may be the same or different and each independently represents a hydrogen atom or a hydrocarbon group, n is a degree of the polymerization. Especially preferable, without limiting the scope of the present invention, is a compound of the above formula having a phenyl group for all $R_1$, $R_2$, and $R_3$, and a hydrogen atom for all $R_4$, $R_5$, $R_6$, and $R_7$. With respect to the degree of the polymerization, 1-20 is preferable, and 1-10 is more preferable. The compounds of the above formula maybe used either singly, or two or more of them may be used together.

The above compounds for components (c) may be used either singly, or two or more may be used in combination, in an amount of 3-40% by weight, and preferably 5-30% by weight. If the amount is less than 3% by weight, the flame retardant characteristic cannot be improved; and if more than 40% by weight, the molded products may have defects on their surface.

Besides above components, other thermoplastic polymers may be incorporated in the flame retardant thermoplastic resins composition of the present invention. In such a case, a preferable range of the proportions of the components is 20-94% by weight for component (a), 1-40% by weight for component (b), 3-40% by weight for component (c), and 3-50% by weight for other thermoplastic polymers.

Thermoplastic polymers used here include polyamides, thermoplastic polyesters, liquid crystal polymers, polysulfones, polycarbonates, polyacetals, thermoplastic isocyanate resins, thermoplastic urea resins, polyphenylene ethers, polyimides, polyaryl ketones, polyamide elastomers, polyester elastomers, and the like.

Examples of preferable polyamides are Nylon 6,6, Nylon 6,9, Nylon 6,10, Nylon 6,12, Nylon 6, Nylon 12, Nylon 11, Nylon 4,6, and the like.

Polyester elastomers can be used as a thermoplastic polyester. Thermoplastic polyesters preferably used in the present invention are, for example, polyethylene terephthalate, polybutylene terephthalate, polyesters comprised of terephthalic acid and/or isophthalic acid and bisphenol A, polyesters containing p-hydroxybenzoate residue.

Polysulfones are polymers having the following recurring unit in their structure.

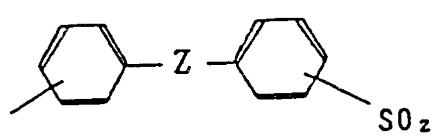

wherein Z is an oxygen, a sulfur, or an aromatic diol residue such as 4-4'-bisphenol.

Given as examples of preferable polysulfones are those having the following recurring units in their structure.

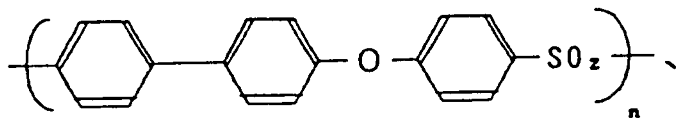

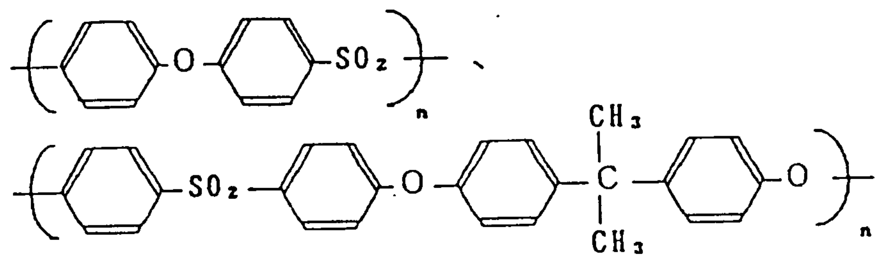

Polycarbonates represented by the following formulae (I) and (II) can be used.

$$-(Ar-A-Ar-O-\overset{\displaystyle O}{\overset{\|}{C}}-O)_n- \qquad (I)$$

$$-(Ar-O-\overset{\displaystyle O}{\overset{\|}{C}}-O)_n- \qquad (II),$$

wherein Ar is a phenylene group or a phenylene group substituted by alkyl, alkoxy, halogen or nitro groups, A represents a carbon-carbon bond or an alkylidene, cycloalkylidene, alkylene, cycloalkylene or azoimino group, a sulfur atom, an oxygen atom, or a sulfoxide group, and n denotes a number of 2 or more.

A preferable carbonate is that represented by the above formulae and having p-phenylene for Ar and isopropylidene for A.

Polyacetals are polymers prepared by the polymerization of formaldehyde or trioxane. Polyacetals prepared from formaldehyde have a structure $-(CH_2O)_n-$. Typical polymers are those having an ester or ether group, introduced at their terminals in order to increase heat and chemical resistance. Polyacetal copolymers are also included. Such copolymers include those with monomers or prepolymers which can provide formaldehyde or active hydrogen; e.g. block copolymers with alkylene glycol, polythiol, vinyl acetate-acrylic acid copolymer, butadiene/acrylonitrile polymer or their derivatives.

Polyacetals obtained by the polymerization of trioxane are typified by copolymers of trioxane and another copolymerizable monomer, e.g. aldehyde, cyclic ether, epoxide, isocyanate, and ether. These include ethylene oxide, 1,3-dioxolane, 1,3-dioxane, epichlorohydrin, propylene oxide, isobutylene oxide, and the like.

Given as preferable examples of thermoplastic isocyanate resins are toluene diisocyanate (TDI), diphenylmethane-4,4-diisocyanate (MDI), as well as various polyols, such as polyurethanes prepared from polyoxyethylene glycol, polyoxypropylene glycol, polyesters with a hydroxylated terminal, polyoxyethylene-oxypropylene glycol, and the like. These thermoplastic polyurethanes have a distinct crystal melting point of 120 °C or higher, preferably 150-200 °C.

Polyphenylene ethers are polymers having the following recurring unit in their structure.

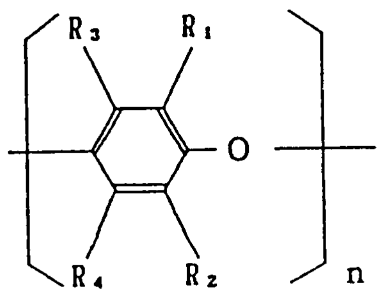

wherein $R_1$, $R_2$, $R_3$, and $R_4$ may be the same or different and each independently represents an alkyl or aryl group, a halogen atom, or a hydrogen atom, and n denotes the polymerization degree. aaa

Specific examples include poly(2,6-dimethylphenylene-1,4-ether), poly(2,6-diethylphenylene-1,4-ether), poly(2,6-dibromophenylene-1,4-ether), poly(2-methyl-6-ethylphenylene-1,4-ether), poly(2-chloro-6-methylphenylene-1,4-ether), and the like. These polymers can be used either singly or in combination of two or more.

In the manufacture of the flame retardant thermoplastic resin composition of the present invention, a compatibility promoter may be added in order to improve the mutual solubility between the polymers, thereby promoting impact resistance and outward appearance of the molded products. Given as the methods of improving the mutual solubility, a method of kneading the resin in the presence of unsaturated compounds having a functional group selected from acid anhydride group, hydroxyl group, amino group, epoxy group, oxazoline group, and imide group, and, optionally, a hydroperoxide; a method of using other polymers having the above functional groups; and the like.

Polymers having the above functional groups are random, block, or graft copolymers produced from the above unsaturated compound having the above functional group and another vinyl monomer which can be copolymerized with such an unsaturated compound.

Specific examples of compatibility promoters are copolymers produced from styrene and the above unsaturated compound having the functional group, and, as required, at least one vinyl monomer which can be copolymerized with such an unsaturated compound, e.g. styrene-glycidylmethacrylate copolymer, styrene-maleic anhydride copolymer, styrene-methacrylic acid copolymer, styrene-acrylonitrile-methacryli acid copolymer, and the like.

Given also are copolymers prepared from ethylene and the above unsaturated compound having the functional group, and, as required, at least 1 other vinyl monomer which can be copolymerized with such an unsaturated compound, e.g. ethylene-glycidylmethacrylate copolymer, ethylene-glycidylmethacrylate-vinyl acetate copolymer, and the like. Included in these copolymers are those obtained by the graft reaction of an ethylene copolymer and other polymer. Examples of such other polymers to be grafted are those obtained by the polymerization of radically polymerizable vinyl monomers, such as alkyl poly(meth)acrylate, polystyrene, styrene-acrylonitrile copolymer, styrene-alkyl poly(meth)acrylate copolymer, and the like.

The composition of the present invention can be prepared by kneading the components by an extruder of various types, Banbury mixer, a kneader, a roller, or the like. Kneading can be performed by kneading all components at one time, by the multiple kneading process in which any portion of optional components are kneaded first, followed by the addition of the remaining portion while kneading is continued.

A preferable method of kneading is a combined use of a continuous kneader and an extruder. A particularly preferable extruder used is a biaxial unidirectional extruder.

When the composition of the present invention is used, fillers, such as glass fiber, carbon fiber, glass beads, asbestos, mica, calcium carbonate, potassium titanate xxx whisker, talc, aramid fiber, glass flake, fluorinated resin, and the like, can be used either singly or in combination of two or more. Among these fillers, a preferable shape of glass fiber and carbon fiber is that having a 6-60 μm diameter and a 30 μm or more length. The fillers can be used, preferably, in an amount of 5-150 parts by weight for 100 parts by weight of the composition.

Besides fillers, other flame retardants known in the art, antioxidants, plasticizers, colorants, lubricants, and the like may be added to the composition of the present invention.

In addition, other known polymers may be added depending on the characteristics required.

The composition of the present invention can be molded into various products by the injection molding, the sheet extrusion, the vacuum molding, the heteroprofile molding, the foaming molding, and the like.

The molded products thus obtained can be used as outer or inner automobile parts xxx, various parts

used in electric and electronic appliances, housing, and the like, making the use of its outstanding characteristics.

E. Examples

The present invention will be described in more detail by way of examples, which are given for illustration of the invention and are not intended to be limiting thereof.

Preparation of Component (a)

(1) Graft copolymer (a-1)

Into a separable flask equipped with a reflux condenser, a thermometer, and a stirrer, 40 parts of polybutadiene rubber latex (as solid), 65 parts of ion exchanged water, 0.35 parts of rosin oxide soap, 15 parts of styrene, and 5 parts of acrylonitrile were charged as initial components. A solution of 0.2 part of sodium pyrophosphate, 0.01 part of $FeSO_4.7H_2O$, and 0.4 part of fructose dissolved in 20 parts of ion exchanged water was added to the above mixture. Then, 0.07 part of cumene hydroperoxide were added to initiate the polymerization. After one hour of polymerization, 45 parts of ion exchanged water, 0.7 part of rosin oxide soap, 30 part of styrene, 10 part of acrylonitrile, and 0.01 part of cumene hydroperoxide were added as increment components over a period of two hours with continuous stirring, followed by an additional one hour polymerization to complete the reaction.

The copolymer latex obtained in this manner was coagulated by the addition of sulfuric acid, washed with water, and dried, to obtain a graft copolymer (a-1).

(2) Graft copolymer (a-2)

A graft copolymer (a-2) was obtained by the polymerization in the same manner as the graft copolymer (a-1), except that monomers listed in column a-2 of Table 1 were used.

(3) Graft copolymer (a-3)

Into a separable flask equipped with a reflux condenser, a thermometer, and a stirrer, 250 parts of ion exchanged water, 3.0 parts of potassium rhodinate, 75 parts of p-methylstyrene, 25 parts of acrylonitrile and 0.1 part of t-dodecylmercaptan were charged. A solution of 0.05 part of sodium ethylenediamine tetraacetate, 0.002 part of $FeSO_4.7H_2O$, and 0.1 part of sodium formaldehyde sulfoxylate dissolved in 8 parts of ion exchanged water was added to the above mixture. Then, 0.1 part of diisopropylbenzene hydroperoxide was added to initiate the polymerization. After about one hour of polymerization the reaction was terminated.

The copolymer latex obtained in this manner was coagulated by the addition of sulfuric acid, washed with water, and dried, to obtain a copolymer (a-3).

(4) Copolymer (a-4)

A copolymer (a-4) was obtained following the same method outlined under the copolymer (a-3), except that styrene was used in place of p-methylstyrene. The reaction was completed.

TABLE 1

| Formulation of Graft Copolymer (Initial Component/Incremental Component) | | | | |
|---|---|---|---|---|
| | (a-1) | (a-2) | (a-3) | (a-4) |
| Polybutadiene | 40/0 | 15/0 | - | - |
| Styrene | 15/30 | 6/13 | - | 75/0 |
| Acrylonitrile | 5/10 | 6/13 | 25/0 | 25/0 |
| p-Methylstyrene | - | 14/33 | 75/0 | - |

Component (b)

(b-1)

The molten auto-curable phenol resin, Bell Pearl, manufactured by Kanebo Co.

Component (c)

(c-1)

Triphenylphosphate

(c-2)

Tricresylphosphate

[ Examples 1-5, Comparative Examples 1-3 ]

The components listed in Table 2 were blended in the percentages shown, then were mixed in a Henschel-type mixer, followed by kneading in the molten state at 220°C with a bend-equipped extruder, and pelletized to provide a pelletized flame retardant resin compositions.

Test leaves were prepared by forming the resulting flame retardant resin compositions in an injection molder with the cylinder temperature set at 230°C. The results of evaluations of the resulting flame retardant resin compositions are given in Table 2.

The physical characteristics of the resulting flame retardant resin compositions were evaluated by the following methods.

(1) Flame retardance

a. O.I.(Oxygen Index)

Test leaf dimensions : 1/8" x 1/2" x 5"

b. Combustibility test conforming to UL-94

Test leaf dimensions : 1/16" x 1/2" x 5"

(2) Izod impact value

ASTM D256 1/4", 23°C, notched (kg•cm/cm)

TABLE 2

| | Example 1 | Example 2 | Example 3 | Example 4 | Example 5 | Comparative Example 1 | Comparative Example 2 | Comparative Example 3 |
|---|---|---|---|---|---|---|---|---|
| Polymer Composition of Component (a) (%) | | | | | | | | |
| a-1 | 37.5 | - | - | 37.5 | - | 37.5 | 37.5 | 37.5 |
| a-2 | - | 100 | - | - | 100 | - | - | - |
| a-3 | 62.5 | - | 87.5 | 62.5 | - | - | 62.5 | 62.5 |
| a-4 | - | - | 12.5 | - | - | 62.5 | - | - |
| Amount of p-Methylstyrene in Component (a) (%) | 46.9 | 47 | 65.6 | 46.9 | 47 | 0 | 46.9 | 46.9 |
| Graft Ratio of Component (a) (%) * | 50 | 45 | | 50 | 45 | 50 | 50 | 50 |
| Formulation of Flame Retardant Resin Composition (%) | | | | | | | | |
| Component (a) | 80 | 80 | 80 | 75 | 30 | 80 | 85 | 94 |
| Component (b): b-1 | 5 | 5 | 5 | 10 | 5 | 5 | 0 | 5 |
| Component (c): c-1 | 15 | 15 | 15 | | 15 | 15 | 15 | 1 |
| c-2 | | | | 15 | | | | |
| Polycarbonate | | | | | 50 | | | |
| Evaluation Results of Flame Retardant Resin Composition | | | | | | | | |
| Flame Retardance | | | | | | | | |
| O.I. (1/8") (%) | 38 | 38 | 39 | 39 | 40 | 25 | 23 | 22 |
| UL-90 (1/16") (%) | V-0 | V-0 | V-0 | V-0 | V-0 | ** | ** | ** |
| Izot Impact Strength | 13 | 13 | 5 | 12 | 25 | 14 | 14 | 15 |

$$* \text{ Graft ratio (\%)} = \frac{y - x}{x} \times 100$$

x: weight of rubber-like polymer in 1 gm of Component (A)

y: weight of undissolved components methyl ethyl ketone in 1 gm of component (a)

** Burning

As can be clearly understood from the results given in Table 2, the compositions of Examples 1-5, which are the flame retardant resin composition of the present invention, achieve the object of the present

invention.

The composition of Comparative Example 1 is an example without bonded p-methylstyrene, showing inferior flame retardance.

The composition of Comparative Example 2 does not contain component (b), while the composition of Comparative Example 3 contains component (c) in an amount falling outside the range of the present invention. The both compositions exhibited inferior flame retardance.

F. EFFECTS OF THE INVENTION

The flame retardant resin composition of the present invention has superior flame retardance without using a halogen-containing flame retardant, and is free from the creation of toxic materials such as dioxins.

Accordingly, with the flame retardant resin composition of the present invention it is possible to produce large-size molded products for office equipment and electrical appliances for OA applications. These materials are superior in practical application, and are extremely useful as production materials, having an exceptionally high industrial value.

**Claims**

**1.** A flame retardant resin composition comprising the following components (a), (b) and (c) in the ratio (a):(b):(c) = 40-96:1-40:3-40% by weight;

Component (a): a thermoplastic resin comprising (i) 0-70% by weight of a rubber-like polymer and (ii) 100-30% by weight of a polymer component formed from monomers selected from the group consisting of a methylated aromatic vinyl monomer, and, optionally, a hydroxylated aromatic vinyl monomer, an aromatic vinyl monomer, a cyanated vinyl monomer, a (meth)acrylic acid ester monomer, maleic anhydride, and a maleimide monomer; graft ratio of the thermoplastic resin being 10-150% when the rubber-like polymer is used,

Component (b): a thermosetting resin, and

Component (c): a phosphate compound.

European Patent Office

# EUROPEAN SEARCH REPORT

Application Number

EP 91 20 1663

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 149 813 (BASF AG)<br>* page 4, line 1 - page 12, line 10; claims 1-10; examples *<br>--- | 1 | C08K5/521<br>C08L25/16<br>//(C08L25/16, 101:00) |
| X | EP-A-0 176 775 (BASF AG)<br>* page 5, line 33 - page 7, line 25 *<br>* page 11, line 31 - page 12, line 14 *<br>* page 15, line 8 - page 17, line 12; claim 1; examples 1-9 *<br>--- | 1 | |
| X | EP-A-0 176 774 (BASF AG)<br>* page 5, line 15 - page 7, line 4 *<br>* page 10, line 17 - page 11, line 9; claim 1; examples 1-10 *<br>--- | 1 | |
| X | EP-A-0 007 460 (CIBA-GEIGY AG)<br>* page 2, paragraph 3 - page 3, paragraph 4 *<br>* page 4, paragraph 4 *<br>* page 9, paragraph 2 - page 10, paragraph 3; claims 1-3,5-7,11-14; examples 12-14 *<br>----- | 1 | |
| | | | **TECHNICAL FIELDS SEARCHED (Int. Cl.5)** |
| | | | C08L<br>C08K |

The present search report has been drawn up for all claims

| Place of search | Date of completion of the search | Examiner |
|---|---|---|
| THE HAGUE | 10 MARCH 1992 | FUHR C.K.B. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document